(19)

Europäisches
Patentamt
European
Patent Office
Office européen
des brevets

(11) **EP 1 975 877 B1**

(12) **EUROPEAN PATENT SPECIFICATION**

(45) Date of publication and mention
of the grant of the patent:
**19.09.2018 Bulletin 2018/38**

(51) Int Cl.:
***G06T 7/00*** (2017.01)

(21) Application number: **08104524.7**

(22) Date of filing: **23.11.2005**

(54) **Method for point-of-interest attraction in digital images**

Verfahren zur Anziehung eines Interessenspunktes bei Digitalbildern

Procédé d'attraction du point d'intérêt dans des images numériques

(84) Designated Contracting States:
**DE FR GB**

(43) Date of publication of application:
**01.10.2008 Bulletin 2008/40**

(62) Document number(s) of the earlier application(s) in
accordance with Art. 76 EPC:
**05111121.9 / 1 791 087**

(73) Proprietor: **Agfa HealthCare N.V.**
**2640 Mortsel (BE)**

(72) Inventor: **Dewaele, Piet**
**Agfa HealthCare**
**2640 Mortsel (BE)**

(56) References cited:
• **QIN-ZHONG YE ED - INSTITUTE OF ELECTRICAL AND ELECTRONICS ENGINEERS: "THE SIGNED EUCLIDEAN DISTANCE TRANSFORM AND ITS APPLICATIONS" PROCEEDINGS OF THE INTERNATIONAL CONFERENCE ON PATTERN RECOGNITION. (ICPR). ROME, 14 - 17 NOV., 1988; [PROCEEDINGS OF THE INTERNATIONAL CONFERENCE ON PATTERN RECOGNITION. (ICPR)], WASHINGTON, IEEE COMP. SOC. PRESS, US, vol. VOL. 1, no. 1988, 14 November 1988 (1988-11-14), pages 495-499, XP000013010 ISBN: 978-0-8186-0878-0**
• **JONES M W ET AL: "Shape representation using space filled sub-voxel distance fields" SHAPE MODELING AND APPLICATIONS, SMI 2001 INTERNATIONAL CONFERENCE ON. MAY 7-11, 2001, PISCATAWAY, NJ, USA,IEEE, 7 May 2001 (2001-05-07), pages 316-325, XP010541346 ISBN: 978-0-7695-0853-5**
• **MULLIKIN J C: "THE VECTOR DISTANCE TRANSFORM IN TWO AND THREE DIMENSIONS" CVGIP GRAPHICAL MODELS AND IMAGE PROCESSING, ACADEMIC PRESS, DULUTH, MA, US, vol. 54, no. 6, 1 November 1992 (1992-11-01), pages 526-535, XP000332321 ISSN: 1077-3169**

EP 1 975 877 B1

**Description**

FIELD OF THE INVENTION

The present invention relates to a method to automatically attract a point selection device towards a point-of-interest in the digital medical image on the basis of digital image processing. Measurements of anatomy may be based on these points-of-interest in the image.

BACKGROUND OF THE INVENTION

In radiological practice, geometric measurements are frequently used to diagnose abnormalities. In order to perform these measurements, key user points are placed in the image on their corresponding anatomical landmark position. Measurements such as the distance between two points, or the angulation between lines are based on the position of the key user points. In similarity to a Region-Of-Interest (ROI) in 2D images and a Volume-Of-Interest (VOI) in 3D images, the term Point-Of-Interest (POI) is adopted to designate these key user points in a 2D or 3D image.
Today, radiological measurements on X-ray images are usually either made on film using conventional measuring devices (such as a ruler, a caliper or a rubber band to measure lengths, and a square or goniometer to measure angles) or, in a digital image displayed on a screen, using cursor controlled points (such as a pair of points to measure the Euclidean distance between).
In EP-A-1 349 098 a method is disclosed to automate the measurements in digitally acquired medical images by grouping measurement objects and entities into a computerized measurement scheme consisting of a bi-directionally linked external graphical model and an internal informatics model. In a measurement session according to EP-A-1 349 098, a measurement scheme is retrieved from the computer and activated. Measurements are subsequently performed on the displayed image under guidance of the activated measurement scheme.
In this computerized method, a multitude of geometric objects are mapped in the digital image onto which other measurement objects and finally measurement entities (such as distances and angles) are based. The basic geometric objects are typically key user points, which define other geometric objects onto which geometric measurements are based. The required user interaction typically involves moving the cursor until its position is over the intended anatomical position and pressing the mouse button to fix this position. In the event of malpositioning, the user may manipulate the point's position by dragging it onto a new location, during which the graphical measurement construction in the image window and the measurement results and normative value comparison in the measurement results are continually updated to reflect the changes.
This method does not disclose however how the point mapping may be effectuated automatically without the need of user positioning and manipulation of key measurement points. Ye et al. ("The Signed Euclidean Distance Transform and Its Applications", 1988) proposes an alternative automatic distance measurement method based on Euclidean Distance Transform method. However, objects designated on input images are not classified and considered in distance measurement. Moreover, the proposed technique is not designed for point-of-interest attraction towards an object pixel in a digital image.
A major drawback of these prior art methods to perform geometrical measurements is increased measurement error or measurement uncertainty. The error of measurement is the result of a measurement value minus the (true) value of the measurand. Measurement error is due to different sources, basically falling into one of two classes.
Systematic or bias errors arise from consistent and repeatable sources of error (like an offset in calibration). Systematic errors can be studied through inter comparisons, calibrations, and error propagation from estimated systematic uncertainties in the sensors used. Systematic error is defined as the mean that would result from an infinite number of measurements of the same measurand carried out under repeatable conditions minus the (true) value of the measurand. This source of error can be reduced by better equipment and by calibration. Random errors also referred to as statistical errors arise from random fluctuations in the measurements. In particular, digitization noise (e.g. geometric digitization: finite pixel size; intensity digitization: quantization of gray levels) and the errors introduced by counting finite number of events (e.g. X-ray photon count) are examples of random errors in the context of digital X-ray images. Random error is defined as the result of a measurement minus the measurement that would result from an infinite number of measurements of the same measurand carried out under repeatable conditions. Particularly this source of error is prevailing in the prior art of performing measurements. Inter-observer and intra-observer variance on measurement values contribute to this source of error, and has its origin in several forms of ambiguity in defining the measurand. Lack of unambiguous definition of the measurand with respect to the imaged patient anatomy and lack of knowledge of the geometrical pose of the patient with respect to source and detector are the main source of random error.
Repeatability and reproducibility of a measurement require that the random errors involved in the measurement procedure are low.
Although random errors are reduced when a measurement is repeated many times and the results averaged together, this can rarely be achieved in clinical practice. It is an object of the invention to reduce this source of error substantially with respect to the prior art method.

The use of digital measurement templates provides a substantial means over the film-based or generic measurement methods to reduce random error by providing an unambiguous and instantaneous indication as to the position of the measurement objects in the actual image. The graphical part of the measurement template graphically shows how the measurement point relates to the anatomic outlines that appear in the medical image. However, it remains the user's responsibility to map the measurement points in the image. In musculoskeletal images, these points of interest will typically lie on the cortex of bones in the image. These cortical outlines coincide with the digital edge of the imaged bone. In 3D MR or CT images, these points typically lie on the border of organs or structures, which position in the image coincides with the three-dimensional edge of them. Therefore, it is the user's task to position as faithfully as possible these key user points. A substantial portion of random error remains in this manual step for the reason that, although selection may be at the pixel level by zooming out the appropriate portion of the image, different pixels may still be selected as the intended measurement point location.

This positional variation in the selected pixel may be introduced by the same user, when performed on different times, introducing the so-called intra-observer variation, or it may result by different users locating the points differently with respect to the imaged anatomy, resulting in the so-called inter-observer variation.

Hence there is a need to automate and objectify the selection of key points-of-interest that are embedded in a radiological image.

The methods of point selection as outlined in the sequel are different from the auto-snapping in popular CAD drawing packages towards graphical objects in that in these packages, no image content is snapped to by means of digital image processing operators; in contrast the CAD graphical objects are usually stored in a database structure onto which operates an algorithm for highlighting the graphical object of interest in the vicinity of the cursor in the viewing area.

The term Point-Of-Interest attraction is used to name the process of automatically computing the point-of-interest based on attracting a point selection device such as a mouse cursor from its user-determined position towards the image processing-based position, according to specific geometric or radiometric criteria. The geometric criterion that is used in the present invention is the selection of the geometric nearest object point starting from the given user-determined position. The object is defined as a collection of feature points in the image or volume, computed by an image operator or image processing algorithm, such as an edge detector, a ridge detector, a corner or a blob detector.

SUMMARY OF THE INVENTION

The above-mentioned objects are realized by a computer implemented method for point-of-interest attraction towards an object pixel in a digital image having the specific features set out in claim 1. Specific features for preferred embodiments of the invention are set out in the dependent claims.

Further advantages and embodiments of the present invention will become apparent from the following description and drawings.

Another aspect of the present invention relates to a user interface as set out in the claims.

The embodiments of the method of the present invention are implemented in the form of a computer program product adapted to carry out the method steps of the present invention when run on a computer.

The computer program product is commonly stored in a computer readable carrier medium such as a CD-ROM. Alternatively the computer program product takes the form of an electric signal and can be communicated to a user through electronic communication.

BRIEF DESCRIPTION OF THE DRAWINGS

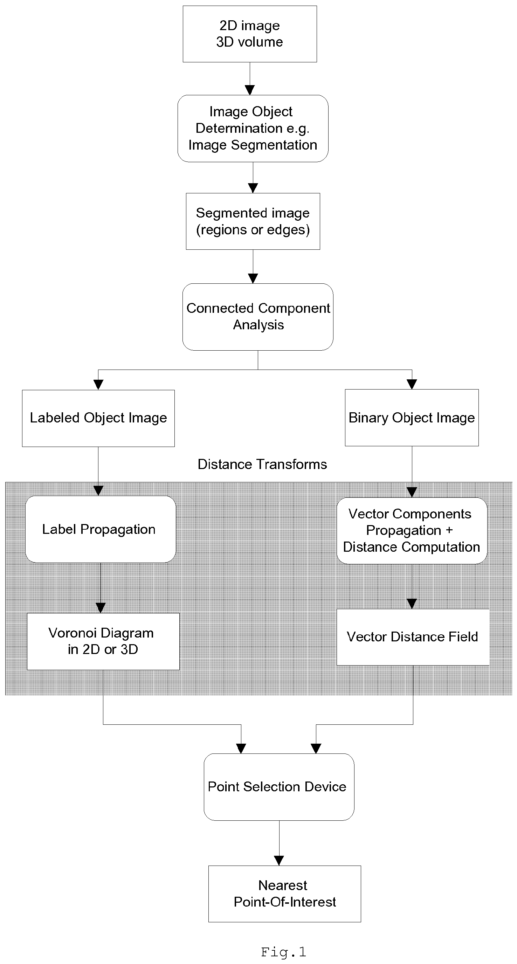

Fig. 1. shows a general block diagram according to the present invention.

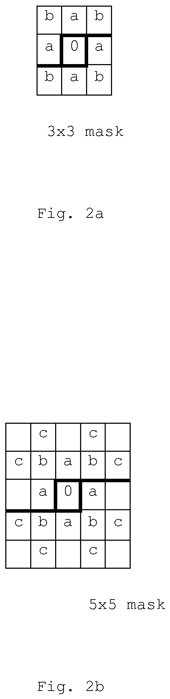

Fig. 2. General layout of the 2D chamfer masks for the (a) 3x3 case; and (b) 5x5 case. In the sequential approach, the 3x3 or 5x5 mask is split in two symmetric halves along the thick line. The topmost mask halve $N_f$ is used in one forward scan and the bottommost mask halve $N_b$ is used in one backward scan.

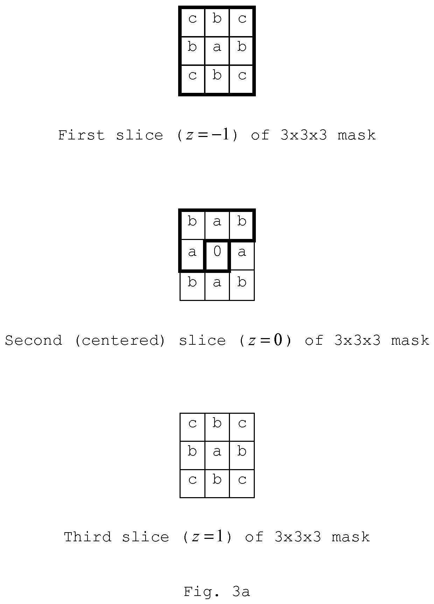

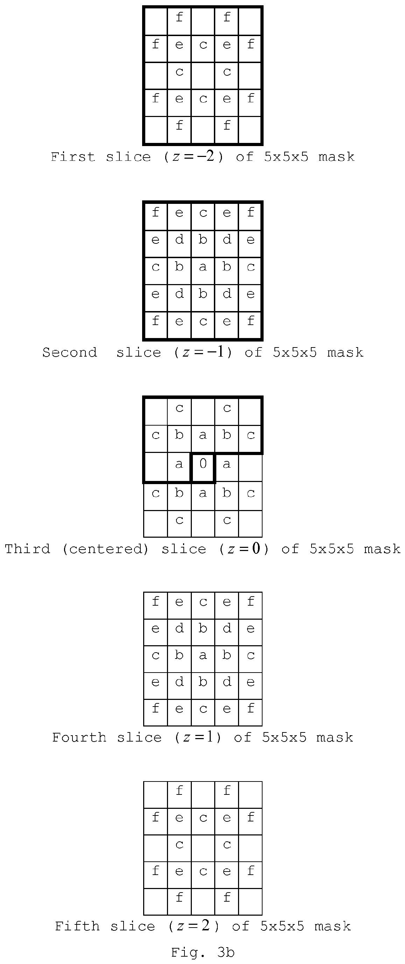

Fig. 3. General layout of the 3D chamfer masks for the (a) 3x3x3 case; and (b) 5x5x5 case. In the sequential approach, the 3x3x3 or 5x5x5 mask is split in two symmetric halves along the thick line. The topmost mask halve $N_f$ is used in one forward scan and the bottommost mask halve $N_b$ is used in one backward scan.

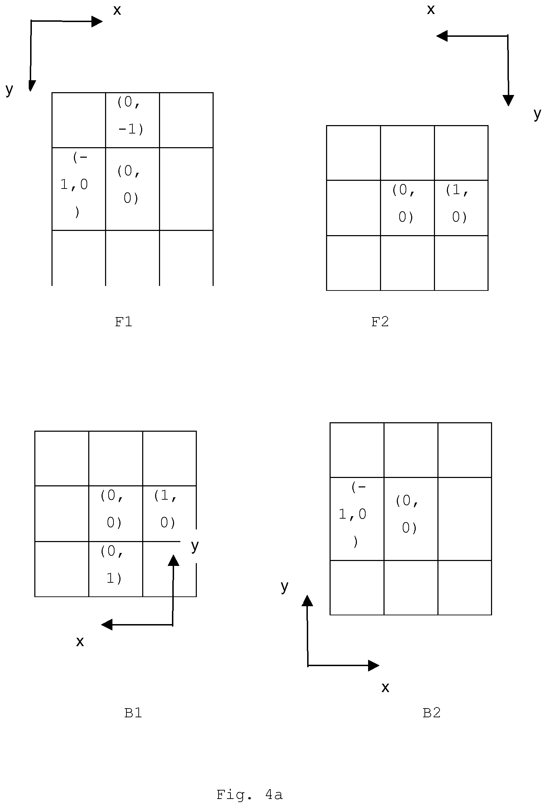

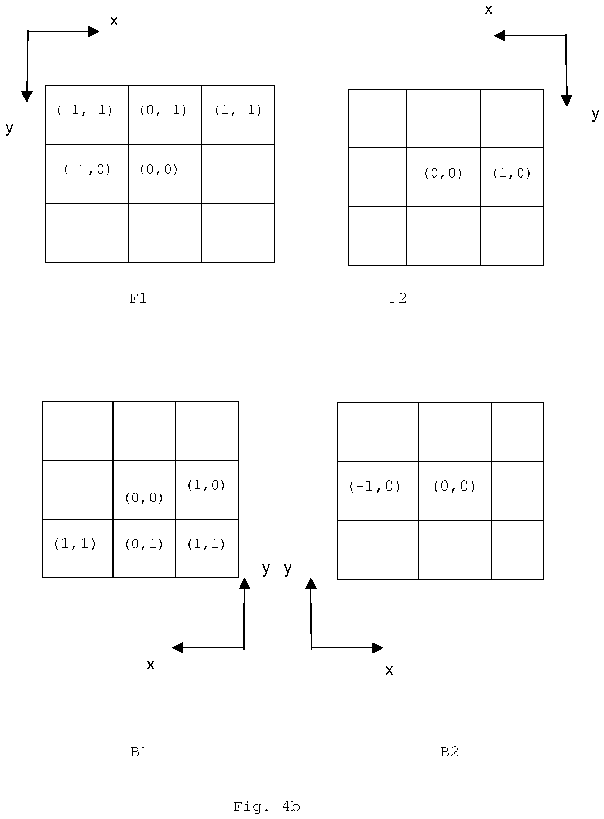

Fig. 4. The 3x3 masks of the (a) 4-signed Euclidean vector distance transform, employing the north, south, east and west neighbors in two forward and two backward scans (b) 8-signed Euclidean vector distance transform, employing all neighbors in two forward and two backward scans. Non-used mask entries are blanked in this figure.

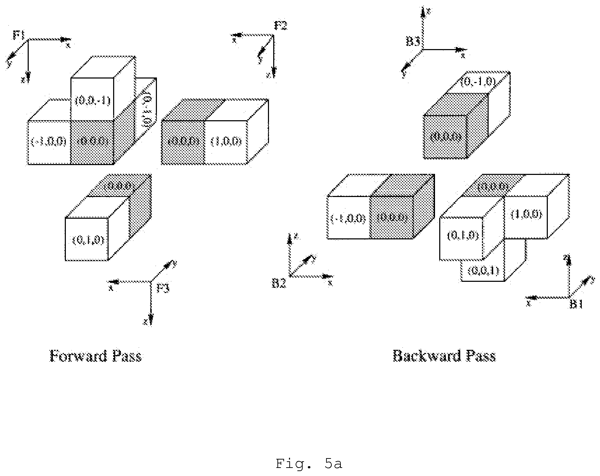

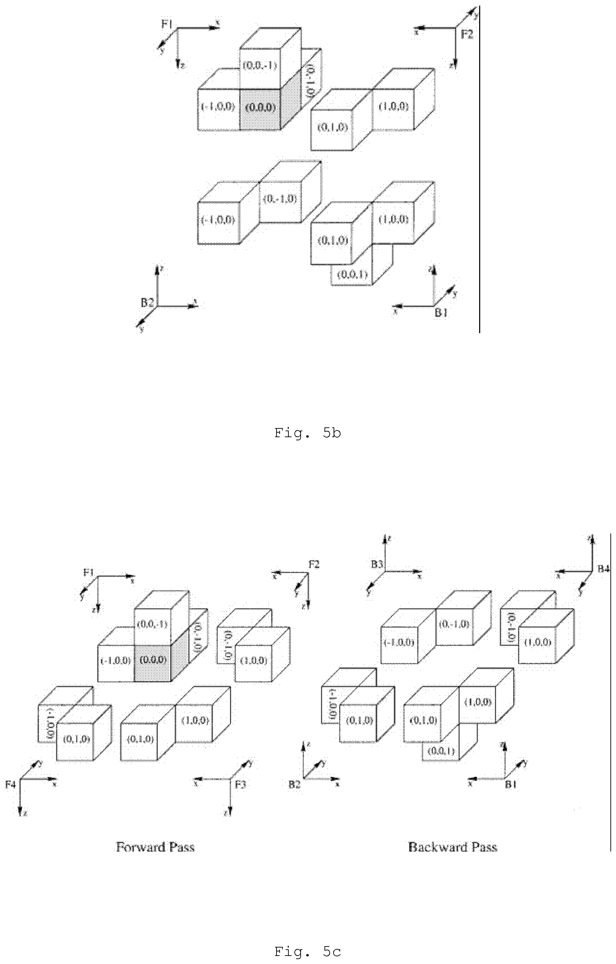

Fig. 5. Different 3x3x3 masks for the 3D Euclidean vector distance transform are obtained by considering different types of neighbors. The 3x3x3 masks may employ only the six face neighbors and only allow local vector displacements in these six directions, as depicted in fig. 5a. This configuration results in the 3D 6-signed Euclidean vector distance transform (EVDT). Alternative masks are shown in fig. 5b, employing only 4 passes and in fig. 5c, employing eight passes. In the latter 3D masks, the central pixel (non-shown) has the vector distance (0,0,0).

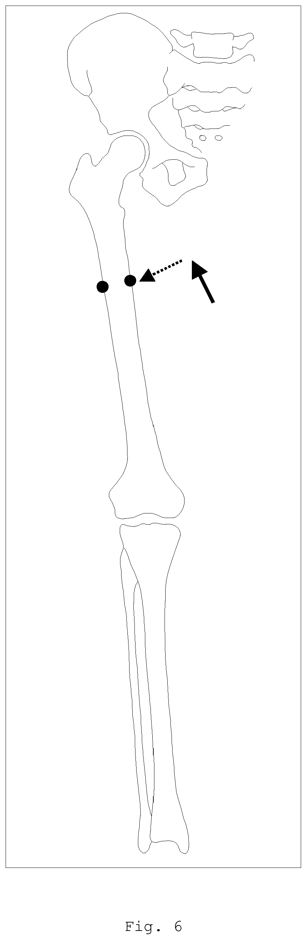

Fig. 6. Schematic drawing of a point-of-interest attraction device in 2D, operating on a full-leg radiographic examination. First, an edge-type object is computed yielding bony edges as displayed. A vector distance map is grown (not displayed), prestoring the nearest object point for each background point. Finally, when a mouse cursor is clicked in the vicinity of the bony edge, the cursor is teleported to the nearest object edge point (black dot).

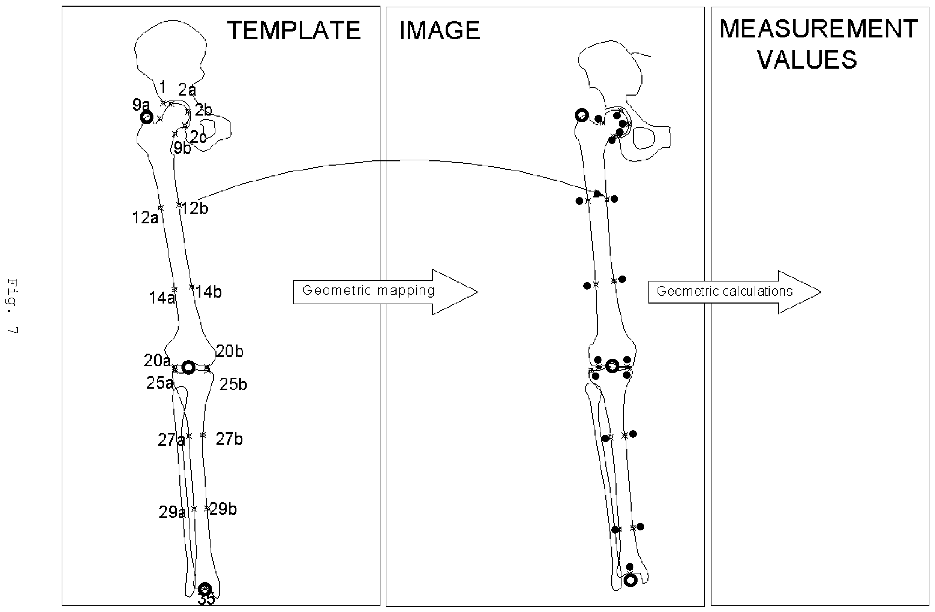

Fig. 7. Application of point-of-interest attraction in a measurement tool according to EP-A-1 349 098. Two types of operation may be distinguished. (1) The first mode (large arrow between template and image pane) maps each point in turn under control of the measurement model as displayed in the template window . The user moves the cursor in the vicinity of the intended key measurement point position, and when clicking the cursor (represented by the filled black dot), the attracted position is computed and highlighted (represented by the superimposed cross and dot). (2) The second mode operates using the anchor points mapping (the non-filled black circles in the template and image pane at anatomical landmark positions). In this mode all measurement points are mapped using the geometrical transformation established using the anchor points, and attracted simultaneously towards their corresponding position. The user has to review the resulting positions, and may accept, refine or correct the final position of each measurement point. All measurement graphics, measurement dimensioning and measurement results are adapted continuously as disclosed in EP-A-1 349 098.

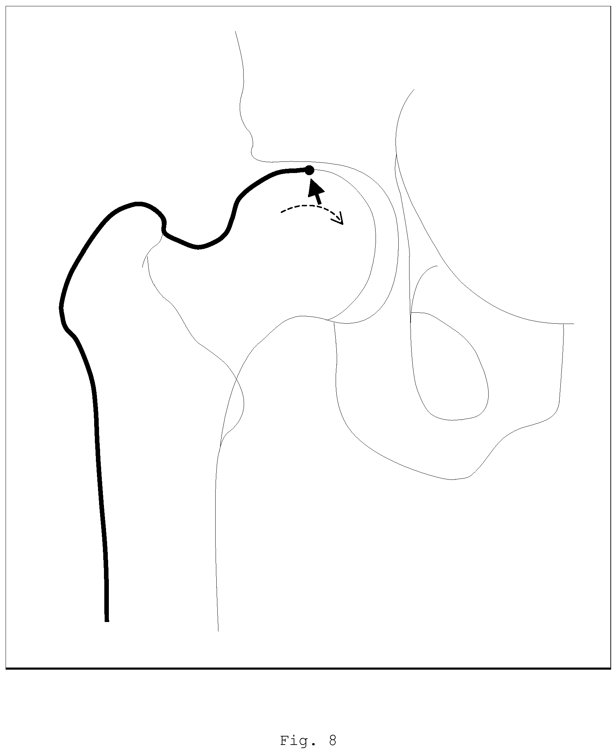

Fig. 8. Application of point-of-interest attraction in semi-automated border tracing. The selection of individual points-of-interest (black dot) is built into a loop, and successive points-of-attraction are stored (highlighted as thick line). In this semi-automatic manner of operation, complete borders of anatomical objects can be captured under control of the user.

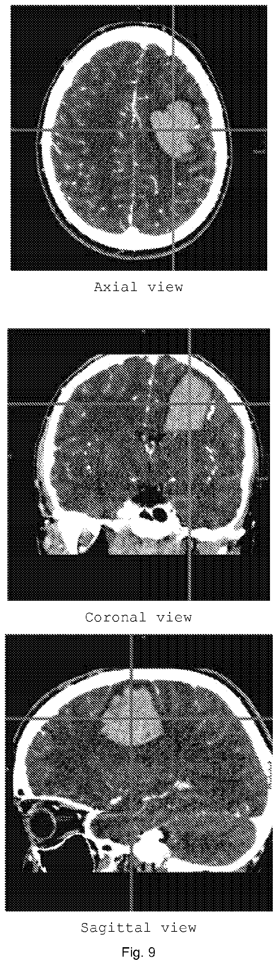

Fig. 9. Application of point-of-interest attraction in 3D volumes. The user interface interaction operates on the axial (A), coronal (C) and saggital (S) cross-sectional views of the volume. The 3D mouse cursor takes the form of a crosshair cursor, one for each view. When the user intends to select a certain point-of-interest, each of the crosshairs of the A, C or S views is moved by mouse dragging in each of the views, until the approximate location is reached. By pressing the left mouse button, the nearest object pixel is looked up, highlighted in the image and made available to the application for further processing. 3D tumor dimensions may be calculated in this way on the basis of attracted points lying on the tumor border.

DETAILED DESCRIPTION OF THE INVENTION

According to the present invention, a method is provided for automatic attraction of a point selection device towards a computed point of interest in the image. This point of interest belongs to an anatomic object and will usually lie on the outer border of it. The anatomic object may be represented by a contour (2D) or a surface (3D) or its dual region (2D) or volume (3D) enclosed by it. In two dimensions, the point selection device operates in the plane of the image and is characterized by its row-column position. In three dimensions, the point selection device may either operate on a slice-by-slice viewing basis, or on the 3D volume or surface visualization.

The point attraction system (fig. 1) consists of three major building blocks. First, the object pixels are determined in the image using for example an object segmentation method. The result of this step is a separation of all pixels in the image into a class of background pixels not belonging to objects of interest and one or more classes of object pixels. Second, a distance transform (DT) is performed on the image comprised of object labels. The specific features of this transform are that both the vector of nearest object pixel and the class label are propagated. The third step is a nearest object point selection device that returns the nearest object pixel of a certain class when the selection pointer is at a given background pixel and the desired object is specified. The point selection device such as a mouse cursor may be teleported to the computed nearest object pixel to graphically display the point attraction. In the detailed description, each of these three steps is outlined. Finally applications are exemplified that are enhanced with point-of-interest attraction method.

**Step 1. Object determination in 2D and 3D**

The object in 2D or 3D is defined as the collection of image pixels or volume voxels that adhere to characteristic features of interest. The most common features of interest are image borders or volume surfaces delineating anatomic structures of interest. This step will therefore be detailed using image segmentation techniques to determine the objects. Other features may be computed instead of high intensity transitions (i.e. edges), such as ridges or valleys to be interchangeably used in the point-of-interest attraction system.

The process of designating an object label to a pixel of a (medical) image and partitioning the image into disjoint sets of pixels all belonging to their respective anatomical object is commonly known as image segmentation. When dealing with 3D images, this process is known as volume segmentation. Many approaches to image segmentation are proposed in the literature; e.g. J. Rogowska, Overview and fundamentals of medical image segmentation, in Handbook of Medical Imaging - Processing and Analysis, Ed. Isaac N. Bankman, Academic Press, Chapter 5, pp. 69-85 and B.M. Dawant, A.P. Zijdenbos, Image Segmentation, in Handbook of Medical Imaging - Volume 2. Medical Image Processing and Analysis, Chapter 2, pp. 71-127, are incorporated herein by reference.

Image segmentation techniques are commonly divided into two categories according to the type of object result. Region-based object algorithms use the similarity of object pixels to group them together into a set of disjoint object regions. Edge-based algoritms use the difference between neighboring pixels to detect object discontinuity. They return a set of object border pixels that may additionally be grouped into longer edge chains.

1. Region-based object segmentation

Commonly used techniques for region-based segmentation are region growing, pixel classification and watershed segmentation. These techniques return the objects in the images as a set of labels, one label per object. Subsequently applied connected component labeling groups pixels with similar label into one object.

2. Edge-based object segmentation

In this class, the object is described in terms of the edges between different regions. Edges can be determined by popular techniques such as the Marr-Hildreth, Laplacian-of-Gaussian, Sobel, Prewitt and Canny operators. Newer techniques employ models that are deformed within learned bounds to delineate the structures of interest. These techniques have in common that they produce one-pixel thick borders of image structures such as bones, vessels, tissues and organs. An optional step may be to link the edges into segments for further processing using border tracing or dynamic programming algorithms. Each resulting edge pixel is characterized by its coordinates in the image, its strength and its orientation. As the point-of-interest is usually laying on the edge of these image structures, the positional information that is contained in the edges is the input for the next step.

An edge operator that yields low-level image features of specific interest in the context of the present invention is the Canny edge operator, because it delivers potential points-of-interest lying on the border of anatomic structures in medical images. The steps of the implementation are as follows:

1. Convolve the image $g(x,y)$ or volume $g(x,y,z)$ with a Gaussian smoothing kernel of standard deviation $\sigma$.

$$G(x,y) = \frac{1}{\sigma\sqrt{2\pi}}\exp\left(-\frac{x^2+y^2}{2\sigma^2}\right)$$

$$G(x,y,z) = \frac{1}{\sigma\sqrt{2\pi}}\exp\left(-\frac{x^2+y^2+z^2}{2\sigma^2}\right)$$

This operation removes details of increasing size or scale in the image when $\sigma$ is increased. Image smoothing removes spurious edges and may be needed to prevent attraction to noise points associated with smaller-size anatomic detail in the image.

2. Estimate the unit-length normal vector **n** to the local edge for each pixel in the image $g$ or voxel in the volume $g$:

$$\mathbf{n} = \frac{\nabla(G*g)}{|\nabla(G*g)|}$$

$$\nabla = \left(\frac{\partial}{\partial x}, \frac{\partial}{\partial y}\right)(2D) \quad \nabla = \left(\frac{\partial}{\partial x}, \frac{\partial}{\partial y}, \frac{\partial}{\partial z}\right)(3D) \quad .$$

using the derivative or Nabla operator        or

3. Estimate the magnitude of the first derivative in the direction of the normal as

$$\left| G_{\mathbf{n}} * g \right|,$$

with $G_{\mathbf{n}}$ the operator representing the first partial derivative of $G$ in the direction $\mathbf{n}$, that is

$$G_{\mathbf{n}} = \frac{\partial G}{\partial \mathbf{n}} = \mathbf{n} \cdot \nabla G \ .$$

4. Find the location of the edges by non maximum suppression along the direction of the normal $\mathbf{n}$. This amounts to setting the derivative of $G_{\mathbf{n}}*g$ to zero:

$$\frac{\partial}{\partial \mathbf{n}} G_n * g = 0 \ .$$

This operation is equivalent to detecting a zero crossing of the second derivative in the direction $\mathbf{n}$ in the smoothed image $G*g$:

$$\frac{\partial^2}{\partial \mathbf{n}^2} G * g = 0 \ .$$

5. Threshold the edges obtained in step 4 using hysteresis thresholding on the magnitude of the edge obtained in step 3. Hysteresis thresholding retains all edges with magnitude $|G_{\mathbf{n}}*g|$ above a high threshold $T_h$, but also retains more faint edges with magnitude above a low threshold $T_l$, if such faint edges are connected to at least one edge pixel above $T_h$. This operation is capable of removing faint edges due to noise and irrelevant anatomic detail, while still retaining low-contrast edges that are linked to at least one high contrast edge pixel or voxel. For example, edges lying on the cortex of the femoral shaft are typically high-contrast edges, whereas edges in the hip area are low contrast edges on the femur. Obviously, one is interested in retaining these faint edges as well, to segment the femoral bone as a whole.

6. Repeat step 1-5 with increased $\sigma$, to obtain edges of anatomic objects on a coarser-scale.

7. A feature synthesis may be applied, consisting of combining the edges at different scales into one synthesized edge response. The resulting edge map constitutes the features of interest of which representative points will be selected by the point selection device.

The edges may optionally be superimposed on the medical image to visualize the detected anatomical borders.

### 3. 3D segmentation

In 3D, the object voxels are commonly also segmented from the dataset via a binary thresholding operating directly on the voxel values. All voxels with value lower than a threshold can be considered object voxels. Different structures in CT data sets are commonly segmented in this way by appropriately choosing a threshold on the Hounsfield units. The transition from object voxels to background voxels defines a surface in 3D. The voxels that make up the surface can be extracted by processing the 3x3x3 neighborhood. Whenever the central voxel has the object label, a transition voxel is determined when at least one of the 26 neighbors has the background label. These transition voxels are retained in the object set, all other receive the background label. In this way, the point-of-interest selection process as detailed below will attract to voxels lying on the object surface, when the point selection device is pointing at a voxel either inside or outside the object.

### 4. Connected components analysis

Connected components analysis or connected components labeling scans the image/ volume and groups all contiguous pixels/ voxels. When segmentation is based on edge detection, an object consists of pixels belonging to a connected chain of edge pixels in 2D, or in 3D, consists of all contiguous voxels on a surface. When segmentation is region- or volume-based, the objects are sub-areas in the 2D image or sub-volumes in the 3D volume. In a connected component, each pixel/voxel of the same component is labeled with the same gray level, color or label.

In 2D, the neighborhood of a pixel either comprises the north, south, east and west neighbors (4-connectivity), or may be augmented with the diagonal neighbors (8-connectivity). In 3D, the neighborhood of a voxel consists of the 6 face neighbors (6-connectivity) if at most one of the 3D coordinates is allowed to differ. If at most two coordinates are allowed to differ, the 12 vertex neighbors are also valid neighbors (18-connectivity). Finally, if all three coordinates are allowed to differ, the 8 corner neighbors are included as well (26-connectivity).

Although the segmentation image may be multi-valued integer, a binary segmented image is assumed with 0 assigned to background (non-object) points and 1 to object points. The connected components labeling operator makes a first scan through the image or volume until it comes to an object point $q$=1. In that case, the half-neighborhood consisting of neighborhood points that have already been visited in the scan are inspected. For an 8-connected neighborhood in 2D for example, this half-neighborhood consists of the north, west and the two upper diagonal pixels. Based on the labels of the points in the half-neighborhood, the labeling of the current point $q$ is as follows. If all neighbors of the half-neighborhood are 0 (i.e. there are no previous neighboring object points), assign a new label to $q$; else, if only one neighbor has value 1 (i.e. the current pixel has only one previous neighboring object point), assign its label to $q$; else if one or more of the neighbors are 1 (i.e. the half-neighborhood comprises more than one object point, possibly with different labels), assign one of their labels to $q$ and make a note of the equivalences.

After this first image or volume scan, the equivalent label pairs are sorted into equivalence classes and a unique label is assigned to each equivalence class.

A second image or volume scan is made to replace each label assigned during the first scan with the unique label of the equivalence classes. All points with the same unique label belong to the same connected component. The connected components may be displayed using the gray value or color assigned to each equivalence class.

An alternative method to the two-scan connected components algorithm may be based on a greedy search through the image of volume, starting from each non-visited object point, and progressing through the image or volume to recursively visit and collect all neighboring objects points that are connected to the start point.

The equivalence class label may be further assigned an anatomic nomenclature label according to the specific imaged anatomic structure (s) (i.e. name or type of bone, organ or tissue) using object recognition and classification techniques of the prior art.

5. Voronoi diagram and image or volume tessellation

A Voronoi diagram of a 2D point set of $N$ representative points in the plane is a set of $N$ polygons that jointly segment the plane such that each pixel in a polygonal cell is nearer to the point representative of the cell than to any other point of the representative point set. In 3D, the Voronoi diagram of a 3D point set of $N$ representative points in the volume is a set of $N$ polyhedra that jointly segment the volume such that each voxel in a polyhedron is nearer to the point representative of the cell than to any other point of the representative point set. Because pixels and voxels have discrete nature and because different distance transforms yield different results, the boundary of the polygonal cells in the image or the faces of the polyhedral cells in the volume is jagged. Hence the Voronoi diagram produced in this context is termed a pseudo-Dirichlet tessellation.

When each point of the 2D or 3D representative point set is labeled differently, all pixels resp. voxels belonging to the same polygon resp. polyhedron may also receive the same label as that of the representative point. In this way, the complete image or volume is segmented into a set of $N$ classes (labels). The class membership of each pixel resp. voxel can subsequently be retrieved by simple pixel address lookup.

An area Voronoi diagram is a generalization of a 2D point Voronoi diagram in that the objects are not isolated points but a set of non-overlapping connected components. The area Voronoi diagram segments the image into areas of irregular shape with the property that each pixel inside the area is nearer to its representative connected component than to any other representative connected component in the image.

An area Voronoi diagram that has particular importance in the context of the present invention is one that departs from the edge pixels such as obtained by the Canny edge detector. The areas have the meaning of compartmenting the image into regions of influence, one region for each segment of contiguous edge pixels. The influence consists in that the point-of-interest attraction will yield a point that lies on the edge segment associated with the region of influence when the point selection device is pointing at a non-edge pixel inside the region.

A volume Voronoi diagram is a generalization of a 3D point Voronoi diagram in that the objects are not isolated 3D points but a set of non-overlapping connected components in 3D, and the Voronoi diagram now segments the volume into irregularly shaped compartments, one for each representative connected component.

Area and volume Voronoi diagram are computed using the distance transforms whereby the label of the connected component is propagated together with distance information. The division lines or surfaces, i.e. lines resp. surfaces separating differently labeled pixels resp. voxels, constitute the Voronoi diagram. The class membership of each image pixel resp. volume voxel can subsequently be retrieved by simple pixel resp. voxel address lookup.

The storage of the label, representing information such as the medical nomenclature, can be used to select a point-of-interest on a specific anatomic structure from any initial position in the image of the point selection device, ignoring possibly nearer but differently labeled structure(s). Conversely, when the desired anatomic structure to jump to is not specified during the point-of-interest attraction, the anatomic label of the attracted point-of-interest can be retrieved and displayed, given the current pixel position of the point selection device.

**Step 2. Distance Transforms (DT) in 2D and 3D**

A distance transform applied to the object pixels results in a distance map where the value (positive) of each non-object pixel is the distance to the nearest pixel of the object. Generating such maps using an Euclidean distance metric is complex since direct application of this definition usually requires a huge computation time when tackled in a combinatorial way, due to the global nature of the problem. It involves computing the Euclidean distance between a given non-object pixel and each object pixel, selecting the lowest distance, and repeating this process for each other non-object pixel in the image. Furthermore, the computation of the distance is not sufficient for solving the application of finding the nearest object pixel belonging to a desired labeled object, given a background pixel. What is needed apart from the distance is information pertaining to the position of the nearest object pixel and the class of the nearest object pixel, given the non-object (or background) pixel. Hence, the anatomic label of the object pixel needs to be propagated also when growing the distance map, so that the nearest point on a specific anatomic object can be retrieved. Many approaches to compute distance transforms are proposed in the literature e.g. O. Cuisenaire, Distance transformations: fast algorithms and applications to medical image processing, Ph.D. thesis, Université Catholique de Louvain, Laboratoire de telecommunications et télédétection, Oct. 1999, 213 p, incorporated herein by reference.

The notation adopted in the following is that $p$ and $q$ denote points $(i, j)$ in 2D and voxels $(x, y, z)$ in 3D. The distance may either be written as a scalar $d$, when it denotes the distance of a background point $p$ from the nearest object point $q$, or as a vector $\vec{d}$, when it denotes the displacement that has to be applied to a background point $p$ to reach the nearest object point $q$.

*1. Euclidean distance transform (EDT) and signed Euclidean distance transform (SEDT) by parallel propagation (based on mathematical morphology object dilation)*

A straightforward way to compute the Euclidean distance transform (EDT) is to grow the successive iso-distance layers starting from the object points $q$ using an object dilation algorithm, each time incrementing the value of the distance label $d(p)$, $p=(i, j)$ assigned to the pixels $p$ of the layer when a new layer is started. During each iteration, requiring a pass over all image pixels, the class label $c$ of the neighboring pixel and the nearest object pixel $q$ assigned to the neighboring pixel that yielded the minimal distance is propagated by assignment to the central pixel $p$. More specifically, the distance and class image grown at each dilation iteration $r$ are computed as

$$d^{r}(i, j) = \min_{(k,l) \in N(i,j)} (d^{r-1}(i+k, j+l) + h(k,l)) \quad \text{(distance propagation)}$$

$$(k_{\min}, l_{\min}) = \arg\min_{(k,l) \in N(i,j)} (d^{r-1}(i+k, j+l) + h(k,l)) \quad \text{(arg. of min. in neighborhood)}$$

$$c^{r}(i, j) = c(i+k_{\min}, j+l_{\min}) \quad \text{(class label propagation)}$$

$$q^{r}(i, j) = q(i+k_{\min}, j+l_{\min}) \quad \text{(nearest object pixel propagation)}$$

This method computes the unsigned distance transform when only the distance to the nearest object point is stored. When the position $q$ of the nearest object pixel is also propagated into the new layer, a signed Euclidean distance transform (SEDT) vector image can be computed as $SD(p)=p\text{-}q$. The dilation is a mathematical morphology operation using a structure element $h(k,l)$ such as a 4- or 8-connected neighborhood. The drawback of dilation is that it may be slow to compute for large images because the maximal distance of propagation of the iso-distance layers may be as large as the image dimension.
Because of the notion that the distance labels for the neighboring pixels are computed from the current pixel, this computational aspect can be alleviated to a great extent using raster scanning methods. The basic idea is that the global distances in the image can be approximated by propagating local distances, i.e. distances between neighboring pixels. The algorithms for local processing rely on raster scanning in the 2D image or 3D volume, i.e. forward or backward scanning through rows or columns, and are outlined in the next section.

2.Chamfer distance transform by Raster Scanning

*Parallel approach*

The following distance transforms belong to the class of chamfer distance transforms (CDT), also termed weighted distance transforms that approximate the Euclidean distance transform (EDT). The coefficients or weights of the chamfer masks are determined by minimizing for example the maximum absolute error from the true Euclidean metric or the root-mean-square (r.m.s.) difference between the DT and the EDT. The assumption is that the value of the distance for the current pixel can be computed based on the current distances of the pixels in the neighborhood of each neighboring pixel value added with an appropriate mask value, which is an approximation for the local distance between the mask pixel and the center pixel.

In the parallel computation, performed as outlined in the above paragraph on EDT and SEDT by parallel propagation, the complete mask is used, centered at each pixel. The mask can be of any dimension, but typically 3x3 or 5x5 masks are used for 2D images and 3x3x3 and 5x5x5 masks for 3D volume images. In these masks, directions that are equal with respect to the main axes receive the same value. The general layout of the 2D and 3D masks take the form as depicted in fig. 2 resp. fig. 3; the assignment of actual values of the coefficients will be discussed after the section on the sequential approach.

In 2D, the 3x3 mask comprises two different values *a* and *b.* The 5x5 mask comprises three different orientations w.r.t. the main axes, resulting in three coefficients *a,b,c.* Also, in 5x5 masks, some positions can be omitted because they represent an integer multiple of a distance in the same direction from a position closer to the center of the mask. The center distance value in these masks is zero because the masks are centered over the current pixel.

In 3D, the general 3x3x3 mask contains 26 neighboring voxels to the center voxel. However, it comprises only three coefficients according to three fundamentally different orientations with respect to the main axes (arranged per slice through the 3D mask). The general 5x5x5 mask, composed of 125 voxels, comprises likewise different coefficients according to fundamentally different orientations of the line between a voxel and the center of the mask, and the main axes. The drawback of the parallel approach is that the number of iterations, needed to compute the value of the distance transforms for each image pixel or volume voxel can be as large as the maximal image or volume dimension. This computational burden is largely alleviated in the sequential approach.

*Sequential approach*

In the sequential approach, each of the 3x3 or 5x5 masks of fig. 2 and 3x3x3 and 5x5x5 masks of fig. 3 is split in two symmetric halves along the thick line. The topmost mask halve $N_f$ is used in one forward scan and the bottommost mask halve $N_b$ is used in one backward scan.

2.a. 2D chamfer distance transform

The forward scan uses the coefficients in the cells enclosed by the thick lines, and calculates the distances scanning the image from the top row towards the bottom row of the image (slow scan direction). Each row is scanned from left to right (fast scan direction).

The backward or reverse scan uses the coefficients in the remaining cells enclosed by the thin lines, and calculates the remaining distances. The image is scanned from the bottom row towards the top row of the image. In each row, the fast scan direction is from right to left.

The procedure thus visits each pixel twice, and further depends on the addition of the mask elements with the neighboring pixels, and taking the minimum value. This procedure may be augmented by also propagating the class label of the object voxel, and the coordinates (*i,j*) of the nearest object pixel *q.* The algorithm steps of forward and backward pass can be summarized as follows:

Forward scan

$$d(i,j) = \min_{(k,l)\in N_f(i,j)} (d(i+k, j+l) + h(k,l)) \quad \text{(distance propagation)}$$

$$(k_{\min}, l_{\min}) = \arg\min_{(k,l)\in N_f(i,j)} (d(i+k, j+l) + h(k,l)) \quad \text{(storage of arg. of min. in neighborhood)}$$

$$c(i,j) = c(i + k_{\min}, j + l_{\min}) \quad \text{(class label propagation)}$$

$$q(i,j) = q(i + k_{\min}, j + l_{\min}) \quad \text{(nearest object pixel propagation)}$$

Backward scan

$$d(i,j) = \min_{(k,l) \in N_b(i,j)} (d(i+k, j+l) + h(k,l)) \quad \text{(distance propagation)}$$

$$(k_{\min}, l_{\min}) = \arg\min_{(k,l) \in N_b(i,j)} (d(i+k, j+l) + h(k,l)) \quad \text{(storage of arg. of min. in neighborhood)}$$

$$c(i,j) = c(i + k_{\min}, j + l_{\min}) \quad \text{(class label propagation)}$$

$$q(i,j) = q(i + k_{\min}, j + l_{\min}) \quad \text{(nearest object pixel propagation)}$$

*Chamfer masks coefficients in 2D*

*• City-block DT*

This simple and fast distance transform is obtained by using the 3x3 mask halves, with $a=1$ and $b=\infty$, meaning the diagonal coefficient is ignored. When applied to an object image consisting of one pixel centered at the origin of the coordinate system, the distance transform has iso-distance lines in the form of a diamond shape with sides under 45-degrees. This line pattern differs quite substantially from concentric circle iso-lines that would result when the true Euclidean metric would be applied.

*• Chess-board DT*

The accuracy of this transform is enhanced over the city-block distance transform, for it uses the coefficients $a=1$ and $b=1$, which also include the diagonal neighbor. When applied to the single pixel object image, the iso-distance lines are squares aligned with the coordinate axes.

*• Chamfer 2-3 DT*

This transform is a better approximation for the Euclidean metric than the city-block and the chess-board distance transform. The integer coefficients in the upper and lower half of the 3x3 mask are $a=2$ and $b=3$ when the root-mean-square distance to the true Euclidean distance is minimized and the real-valued coefficients are approximated by integers.

*• Chamfer 3-4 DT*

This transform uses the coefficients $a=3$ and $b=4$ in the 3x3 mask, and results from optimizing the maximum of the absolute value of the difference between the DT and the Euclidean Distance Transform (EDT) followed by integer approximation.

*• Chamfer 5-7-11 DT*

When applying the 5x5 mask, minimizing the maximum of the absolute value of the difference between DT and EDT and approximating by integers, the coefficients $a=5$, $b=7$ and $c=11$ result. This approximation to the EDT leads to more circularly shaped iso-distance lines around a point object.

2.b. 3D chamfer distance transform

Similar to the 2D Chamfer Distance Transform (CDT), the CDT in three dimensions also employs two passes of the distance matrix. The 3x3x3 and 5x5x5 masks are also split in two halves as indicated with thick lines in fig. 2 and fig. 3.
The forward scan uses the coefficients in the cells enclosed by the thick lines, and calculates the distances scanning the volume from the top slice towards the bottom of the dataset. In each slice of the dataset, the slow-scan is from top row of the slice towards bottom row and the fast scan is from left to right in the row.
The backward or reverse scan uses the coefficients in the remaining cells enclosed by the thin lines, and calculates the remaining distances scanning the volume from the bottom slice towards the top slice of the dataset. In each slice of the dataset, the slow-scan is from bottom row of the slice towards top row and the fast scan is from right to left in the row.
The procedure thus visits each voxel twice, and further depends on the addition of the mask elements with the neighboring voxels, and taking the minimum value. This procedure may be augmented by also propagating the class label of the object voxel, and the coordinates (*x,y,z*) of the nearest object voxel *q*. The algorithm steps of forward and backward pass can be summarized as follows:

Forward scan

$$d(x,y,z) = \min_{(k,l,m) \in N_f(x,y,z)} (d(x+k,y+l,z+m) + h(k,l,m)) \quad \text{(distance propagation)}$$

$$(k_{\min}, l_{\min}, m_{\min}) = \arg\min_{(k,l,m) \in N_f(x,y,z)} (d(x+k,y+l,z+m) + h(k,l,m)) \quad \text{(arg. of min. in neighborhood)}$$

$$c(x,y,z) = c(x+k_{\min}, y+l_{\min}, z+m_{\min}) \quad \text{(class label propagation)}$$

$$q(x,y,z) = q(x+k_{\min}, y+l_{\min}, z+m_{\min}) \quad \text{(nearest object pixel propagation)}$$

Backward scan

$$d(x,y,z) = \min_{(k,l,m) \in N_b(x,y,z)} (d(x+k,y+l,z+m) + h(k,l,m)) \quad \text{(distance propagation)}$$

$$(k_{\min}, l_{\min}, m_{\min}) = \arg\min_{(k,l,m) \in N_b(x,y,z)} (d(x+k,y+l,z+m) + h(k,l,m)) \quad \text{(arg. of min. in neighborhood)}$$

$$c(x,y,z) = c(x+k_{\min}, y+l_{\min}, z+m_{\min}) \quad \text{(class label propagation)}$$

$$q(x,y,z) = q(x+k_{\min}, y+l_{\min}, z+m_{\min}) \quad \text{(nearest object pixel propagation)}$$

*Chamfer mask coefficients in 3D*

Depending on the coefficients *h(k,l,m)* of the 3x3x3 and 5x5x5 mask, different chamfer distance transforms with varying error minimization w.r.t. the Euclidean metric result. The following types are obtained when the different neighbor types are involved (e.g. the 26 neighbors of the 3x3x3 mask are composed of 6 face neighbors, 12 edge neighbors and 8 vertex (corner) neighbors).

• *City-block DT*

The simplest, fastest but least accurate distance transform is obtained by using the 3x3x3 mask halves, with *a*=1 and *b*=*c*=∞, edge and vertex neighbors are excluded. When applied to a volume consisting of one object voxel centered at the origin of the coordinate system, the distance transform has iso-distance surfaces in the form of a diamond shape with faces under 45 degrees. These differ quite substantially from concentric spherical surfaces that would result when the true Euclidean metric would be applied.

• *Chess-board DT*

The accuracy of this transform is enhanced over the city-block DT, for it uses the coefficients $a$=1, $b$=1, $c$=∞, which also include the edge neighbors but not the vertex neighbors. The iso-distance surfaces to a single voxel object image are cubes with faces parallel with the coordinate axes.

• *Quasi-Euclidean 3x3x3 CDT*

This transform has enhanced accuracy over the chess-board DT, for it uses the coefficients $a$=1, $b = \sqrt{2}$,

$c$=∞, i.e. the local distance of the edge neighbors to the center pixel is $\sqrt{2}$ instead of 1.

• *Complete 3x3x3 CDT*

This transform is an even better approximation for the Euclidean metric than any of the foregoing CDT's.

Coefficients are now specified for each neighbor, e.g. with $a$=1, $b = \sqrt{2}$, $c = \sqrt{3}$, which represent the local distances of the cell to the center of the neighborhood.

• *Quasi-Euclidean 5x5x5 CDT*

When the mask size is increased, the accuracy of the CDT can still be enhanced. As with the 5-7-11 CDT in two dimensions, cells at an integer multiple distance from a cell closer to the center can be ignored. This transform uses the local distances to the center of the neighborhood, i.e. $a$=1, $b = \sqrt{2}$, $c = \sqrt{5}$, $d = \sqrt{3}$, $e = \sqrt{6}$, $f$=3.

The chamfer methods are still faced with some deficiencies. The first is that these distance measures only approximate the Euclidean metric. The city-block and chess-board measures, despite their computational advantage, are poor approximations to the extent that point-of-interest attraction can yield wrong and non-intuitive behavior. The second is that raster scanning with the chamfer masks of fig. 2 and fig. 3 do not provide a full 360 degree propagation angle, and a systematic error is introduced in the directions not covered by the chamfer masks; for example, each of the 3x3 or 3x3x3 half-masks provide only a 135 degree propagation angle and when the image domain is confined to a convex subset in the non-covered area with respect to the object pixel, the CDT does not compute the distance transform These drawbacks are further alleviated by vector distance transforms outlined hereafter.

3. EDT and Sequential EDT by Raster Scanning

A better approximation of the true Euclidean distance is possible by the use of vectors instead of scalar values for the propagation of distances from an object $O$ into the background $O'$. Each pixel is now a 2-vector (a two-component vector) when computing the distance map in 2D and a 3-vector (a three-component vector) when computing the distance in a 3D image from a background pixel $p \in B$ towards their nearest object pixel $q \in O$. This vector represents the $(\Delta x, \Delta y)$ in a 2D image resp. the $(\Delta x, \Delta y, \Delta z)$ displacement in a 3D image that has to be applied to the background pixel $p$ to reach the nearest object pixel $q$.

$d(p)$ is defined as the shortest distance of a background pixel $p$ towards any of the object pixels $q$ of $O$:

$$d(p) = \min_{q \in O}[d_e(p,q)]$$

The distance formula $d_e$ in EDT and SEDT is the true Euclidean distance to the nearest object pixel, given by the commonly known formulas in 2D and 3D:

$$d_e = \sqrt{\Delta x^2 + \Delta y^2}$$

$$d_e = \sqrt{\Delta x^2 + \Delta y^2 + \Delta z^2} \ .$$

*Sequential EDT algorithm in 2D*

The vector distance map in 2D is computed as follows. Set the distance $d_e(i,j)$ to a large positive number $M$ for any background pixel $p \in B$ and to zero for any object pixel $q \in O$. The following scans are now sequentially applied, using the masks depicted in fig. 4. The computation of the Euclidean distance $d_e(i,j)$ is represented by the norm operator| |.

The forward fast scan runs from top to bottom (slow scan direction), starting from the top-left pixel, and uses a vector mask $\vec{h}_{F1}(k,l)$ in the positive *x*-direction and a vector mask $\vec{h}_{F2}(k,l)$ in the negative *x*-direction. An additional scan F2 ensures a 180 degree propagation angle of displacement vectors.

Forward scan F1 (+ *x*-direction)

$$(k_{\min}, l_{\min}) = \arg\min_{(k,l) \in N_{F1}(i,j)} \left| \vec{d}(i+k, j+l) + \vec{h}_{F1}(k,l) \right| \ \text{(arg. of min. in neighborhood)}$$

$$\vec{d}(i,j) = \vec{d}(i,j) + \vec{h}_{F1}(k_{\min}, l_{\min}) \quad \text{(vector distance propagation)}$$

$$c(i,j) = c(i+k_{\min}, j+l_{\min}) \quad \text{(class label propagation)}$$

$$q(i,j) = q(i+k_{\min}, j+l_{\min}) = (i,j) + \vec{d}(i,j) = p + \vec{d} \quad \text{(nearest object pixel retrieval)}$$

Forward scan F2 (- *x*-direction)

$$(k_{\min}, l_{\min}) = \arg\min_{(k,l) \in N_{F2}(i,j)} \left| \vec{d}(i+k, j+l) + \vec{h}_{F2}(k,l) \right| \ \text{(arg. of min. in neighborhood)}$$

$$\vec{d}(i,j) = \vec{d}(i,j) + \vec{h}_{F2}(k_{\min}, l_{\min}) \quad \text{(vector distance propagation)}$$

$$c(i,j) = c(i+k_{\min}, j+l_{\min}) \quad \text{(class label propagation)}$$

$$q(i,j) = q(i+k_{\min}, j+l_{\min}) = (i,j) + \vec{d}(i,j) = p + \vec{d} \quad \text{(nearest object pixel retrieval)}$$

The backward fast scan runs from the bottom row towards the top row (slow scan), starting from the bottom-right pixel. This scan uses a vector mask $\vec{h}_{B1}(k,l)$ in the negative *x*-direction and a vector mask $\vec{h}_{B2}(k,l)$ in the positive *x*-direction. An additional scan *B2* ensures a 180 degree propagation angle of displacement vectors. The backward slow scan runs from the bottom row towards the top row.

Backward scan B1 (- *x*-direction)

$$(k_{\min}, l_{\min}) = \arg\min_{(k,l) \in N_{B1}(i,j)} \left| \vec{d}(i+k, j+l) + \vec{h}_{B1}(k,l) \right| \ \text{(arg. of min. in neighborhood)}$$

$$\vec{d}(i,j) = \vec{d}(i,j) + \vec{h}_{B1}(k_{\min}, l_{\min}) \quad \text{(vector distance propagation)}$$

$$c(i,j) = c(i + k_{\min}, j + l_{\min}) \quad \text{(class label propagation)}$$

$$q(i,j) = q(i + k_{\min}, j + l_{\min}) = (i,j) + \vec{d}(i,j) = p + \vec{d} \quad \text{(nearest object pixel retrieval)}$$

Backward scan B2 (+ *x*-direction)

$$(k_{\min}, l_{\min}) = \underset{(k,l) \in N_{B2}(i,j)}{\arg\min} \left| \vec{d}(i+k, j+l) + \vec{h}_{B2}(k,l) \right| \quad \text{(arg. of min. in neighborhood)}$$

$$\vec{d}(i,j) = \vec{d}(i,j) + \vec{h}_{B2}(k_{\min}, l_{\min}) \quad \text{(vector distance propagation)}$$

$$c(i,j) = c(i + k_{\min}, j + l_{\min}) \quad \text{(class label propagation)}$$

$$q(i,j) = q(i + k_{\min}, j + l_{\min}) = (i,j) + \vec{d}(i,j) = p + \vec{d} \quad \text{(nearest object pixel retrieval)}$$

Each entry in the masks $\vec{h}_{F1}(k,l)$, $\vec{h}_{F2}(k,l)$, $\vec{h}_{B1}(k,l)$, $\vec{h}_{B2}(k,l)$ represents the vector difference that is applied to the central pixel $(i,j)$ to reach the position of the neighborhood pixel.

For example, in the first mask $\vec{h}_{F1}(k,l)$, (-1, 0) is the vector difference, expressed in horizontal and vertical steps, that is applied to reach the neighborhood pixel west of the central pixel; (0,-1) is the vector difference that is applied to the central pixel to reach the pixel to the north of it. Each of the incremental vector displacements is added to its associated currently stored vector displacement of the neighborhood pixel. The Euclidean distance metric is evaluated for the two neighborhood displacement vectors and compared with the Euclidean distance of the current pixel (marked 'x'). That vector difference is finally applied to the current pixel that yields the lowest Euclidean distance among the three Euclidean distances according to this mask.

A similar comparison operation is applied to the second mask of the forward raster scan, applied from right to left in the row. The second mask considers the neighborhood pixel east of the current pixel, ensuring a 180 degree angle of propagated distance values in the forward scan.

The backward scan applies the third and fourth mask successively in the rows, starting from the bottom-right pixel.

Hence, these masks propagate the vector displacement that is applied to reach the nearest object pixel. Forward and backward scan jointly cover a 360 degree angle of propagation.

For an isolated object pixel, the loci of equal distance from any background pixel in the image will be circularly shaped, and each background pixel of the Euclidean distance map will be the vector displacement that, when vector-added to the current row and column coordinates of the pixel, will yield the coordinates of the isolated object pixel. For an irregularly object shape, the signed Euclidean distance map will contain the vector displacement at each pixel that, when vector-added to the current row and column coordinates of the pixel, will yield the coordinates of the nearest object pixel. Hence, when the object shape is a one-pixel thin contour outline, the SEDT provides the vector pointer, to be applied to any non-object pixel, whether inside or outside the contour, to reach the nearest object pixel on the contour. The length of the vector $\vec{d}(i,j)$ in this distance transform yields the Euclidean distance from the non-object pixel to the nearest object pixel.

The 3x3 masks may employ only the north, south, east and west neighbors and only allow local vector displacements in these four directions, as depicted in fig. 4a. This results in the 4-signed Euclidean vector distance transform, because the sign component of the vectors associated with 4 neighbors is tracked as well. Alternatively, it may employ all eight neighbors as depicted in the masks of fig. 4b, resulting in the 8-signed Euclidean vector distance transform, which yields a more accurate vector distance field.

Optimizations may be performed to compute the minimum distance in a fast recursive way, based on the addition of incremental distances associated with the local vector displacements in the masks.

*Sequential EDT algorithm in 3D*

The vector distance map in 3D is computed as follows. The distance $d_e(x,y,z)$ is set to a large positive number *M* for any background voxel $p \in B$ and to zero for any object voxel $q \in O$. The object in 3D will typically be a set of contiguous voxels on a zero-distance surface in 3D, or a set of contiguous voxels of a zero-distance 3D solid, from which the distance field is computed. The following scans are now sequentially applied, using the masks depicted in fig. 5. The computation of the Euclidean distance $d_e(x,y,z)$ is represented by the norm operator $| |$.

The propagation angle of the ensemble of the masks must now cover all directions in 3D space. Therefore, each of the forward and backward scan through the volume may be complemented with a third scan, instead of two masks per scan for the 2D case; hence, a total of 6 masks is required.

Different 3x3x3 masks are obtained by considering different types of neighbors. The 3x3x3 masks may employ only the six face neighbors and only allow local vector displacements in these six directions, as depicted in fig. 5a. This configuration results in the 3D 6-signed Euclidean vector distance transform (EVDT), because the sign component of the 3D vectors associated with six neighbors is tracked as well. This transform sub-type resembles the 3D equivalent of the city-block chamfer distance transform. Alternative masks are shown in fig. 5, employing either fewer passes (four in fig. 5b) or more (eight in fig. 5c).

In the sequel the operations for the six passes of the 6-signed EVDT (fig. 5a) are detailed.

The forward scan applies a slow scan between slices in the positive *z*-direction: F1 uses a vector mask $\bar{h}_{F1}(k,l,m)$ in the positive *y*-direction and positive *x*-direction, F2 uses a vector mask $\vec{h}_{F2}(k,l,m)$ in the positive *y*-direction and the negative *x*-direction, and F3 uses a vector mask $\vec{h}_{F3}(k,l,m)$ in the negative *y*-direction and the negative *x*-direction.

The backward scan applies a slow scan between slices in the negative *z*-direction: B1 uses a vector mask $\bar{h}_{B1}(k,l,m)$ in the negative *y*-direction and negative *x*-direction, B2 uses a vector mask $\vec{h}_{B2}(k,l,m)$ in the negative *y*-direction and the positive *x*-direction, and B3 uses a vector mask $\vec{h}_{B3}(k,l,m)$ in the positive *y*-direction and the positive *x*-direction.

In any of these passes, the starting point is chosen in the appropriate corner of the 3D volume. The algorithm for each pass is as follows:

For each scan F1, F2, F3, B1, B2, B3:

- argument coordinates of minimum distance in neighborhood:

$$(k_{\min}, l_{\min}, m_{\min}) = \underset{(k,l,m)\in N(x,y,z)}{\arg\min} \left| \vec{d}(x+k, y+l, z+m) + \vec{h}(k,l,m) \right|$$

- vector distance propagation:

$$\vec{d}(x, y, z) = \vec{d}(x, y, z) + \vec{h}(k_{\min}, l_{\min}, m_{\min})$$

- class label propagation:

$$c(x, y, z) = c(x + k_{\min}, y + l_{\min}, z + m_{\min})$$

- nearest object voxel retrieval:

$$q(x, y, z) = q(x + k_{\min}, y + l_{\min}, z + m_{\min}) = (x, y, z) + \vec{d}(x, y, z) = p + \vec{d}$$

Each entry in the masks $\vec{h}_{F1}(k,l,m)$, $\vec{h}_{F2}(k,l,m)$, $\vec{h}_{F3}(k,l,m)$, $\vec{h}_{B1}(k,l,m)$, $\vec{h}_{B2}(k,l,m)$, $\vec{h}_{B3}(k,l,m)$ represents the vector difference that has to be applied to the central pixel $(x,y,z)$ to reach the position of the neighborhood pixel.

Hence, these masks propagate the vector displacement that is applied to a background pixel to reach the nearest object pixel. The ensemble of forward and backward passes will cover all 3D angles of propagation.

For an isolated object voxel, the loci of equal distance from any background pixel towards the object voxel will be circularly shaped, and each background pixel of the signed 3D Euclidean distance field will be the vector displacement that, when vector-added to the current row, column and slice number of the voxel, will yield the coordinates of the isolated object voxel. For an irregularly 3D object shape (e.g. a surface), the signed 3D Euclidean distance map will contain the vector displacement at each background voxel that, when vector-added to the current coordinates of the voxel, will yield the coordinates of the nearest surface voxel, irrespective of whether the background voxel is lying inside or outside the surface.

The length $|\vec{d}(x,y,z)|$ of the vector $\vec{d}$ in this distance transform yields the Euclidean distance from the non-object voxel to the nearest object voxel.

Other 3x3x3 mask subsets and number of passes, or the use of larger masks such as 5x5x5, may be considered to trade-off speed versus accuracy.

*Anisotropic pixel or voxel dimensions*

Unequal voxel dimensions, causing anisotropy, frequently occur in 3D image acquisition because the inter-slice distance is usually different from the in-slice voxel dimensions.

To account for anisotropic sampling, the pixel or voxel sampling dimensions are included in the distance formula, represented by the norm operator| |, as follows for two resp. three dimensions:

$$d_e = \sqrt{\left(\frac{\Delta x}{s_x}\right)^2 + \left(\frac{\Delta y}{s_y}\right)^2}$$

$$d_e = \sqrt{\left(\frac{\Delta x}{s_x}\right)^2 + \left(\frac{\Delta y}{s_y}\right)^2 + \left(\frac{\Delta z}{s_z}\right)^2} \, ,$$

with $s_x$, $s_y$ the in-slice sampling densities, and $s_z$ the between-slice sampling density.

**Step 3. Point-of-interest selection device in 2D and 3D**

1. Point-of-interest selection in 2D (fig. 6)

After a 2D segmentation of the first step, and a the signed distance transformation of the second step, at each pixel the displacement vector is available that needs to be applied to displace the cursor point $p$ towards the nearest segmented object location $q$. Two types of information may now be stored in the signed distance image:

- either the vector $\Delta p = p\text{-}q$ is stored, consisting of two-vector components for displacements in 2D images. This option involves relative addressing when looking up the nearest position, i.e. $\Delta p$ is retrieved from the signed distance image when the cursor position is at position $p$ in the image, and this relative vector is added to the current cursor position $p$ to reach the nearest object position $q$.
- or the location $q$ of the nearest point is stored immediately at $p$. This allows direct addressing in that $q$ is obtained by a simple lookup of its components at $p$ in the signed distance image, when the cursor position is at position $p$ in the image.

The user interface interaction that is associated with this step operates as follows. Interest feature maps such as edges or surfaces, binarized segmentation and vector distance transforms are pre-computed, for example at the time when the image becomes available in the application. This pre-processing may be implemented in a background thread that still allows all other functionalities of the application to be performed. The user preferences may comprise a switch to enable or disable the point-of-interest attraction in the application.

When POI-attraction is enabled, and the user intends to position a certain POI, he/she moves the mouse cursor in the image at the approximate location in the image, and presses the left mouse button, upon which the nearest object pixel is looked up and highlighted in the image. Alternatively, the nearest point that is associated with the current mouse cursor position as the mouse is moved over the image may be highlighted continuously in a certain color. When the user observes that the highlighted point is the one that he is interested in, a left mouse click freezes the position of attraction, and signals the state change to the user by changing the color of the point-of-interest.

This approximate location may potentially be at a large distance from the intended location, because the vector distance field is available over the complete image. A right mouse click may be used to undo the last choice; successive right mouse clicks may be used to undo each previously set point in turn.

To prevent non-intuitive behavior, the largest distance of attraction may be limited by imposing a threshold on the length of the vector of displacement; no attraction occurs and no nearest object point is highlighted when background points are selected that are too far away from segmented border points.

When the anatomic label of the connected components is available, the attraction may be steered to select only points on a pre-defined anatomic structure, ignoring all neighboring structures in the image. For example, point placement may be confined on a specific bone in a radiograph, of which the bone contours are labeled by model-based segmentation. The Voronoi diagram is obtained from the propagation of the anatomic object labels in the image. All background pixels lying in a given Voronoi cell will attract towards an object pixel with the same label. The object pixels, the area pixels of the associated Voronoi cell, or both, may be collectively highlighted when the cursor is inside the cell, to inform the user which object will be attracted to.

2.Point-of-interest selection in 3D volumes (fig. 9)

When dealing with 3D images, the pre-processing comprises a 3D segmentation step to identify binarized 3D features of interest. The signed distance transformation of the previous step now computes the 3-component vector that is needed to displace from the cursor point $p$ towards the nearest object location $q$. As for the 2D case, two types of information may now be stored in a three-dimensional signed distance field:

- either the vector $\Delta p = p\text{-}q$ is stored, consisting of three-vector components for displacements in 3D volumes. This option involves relative addressing when looking up the nearest position, i.e. $\Delta p$ is retrieved from the signed distance image when the cursor position is at position $p$ in the image, and this relative vector is added to the current cursor position $p$ to reach the nearest object position $q$.
- or the location $q$ of the nearest feature voxel itself is stored immediately at $p$. This allows direct addressing in that $q$ is obtained by a simple lookup of its components at $p$ in the signed distance field, when the cursor position is at position $p$ in the volume.

The user interface interaction operates on the axial (A), coronal (C) and saggital (S) cross-sectional views of the volume. The 3D mouse cursor takes the form of a crosshair cursor, one for each view. When the user intends to select a certain point-of-interest, each of the cross-hairs of the A, C or S views is moved by mouse moves in each of the views, until the approximate location $p=(x,y,z)$ is reached. By pressing the left mouse button, the nearest object pixel $q=(x',y',z')$ is looked up, highlighted in the image and made available to the application for further processing.

To prevent non-intuitive behavior, the largest distance of attraction may be limited by imposing a threshold on the length of the vector of displacement; no attraction occurs and no nearest object point is highlighted when non-object voxels are selected that are too far away from segmented surface points. The attraction may be limited to points within a single slice in a given view direction (A, C or S), to enhance intuitive behavior when volumes comprise complex structures of small size (compartmenting the distance field into small 3D cells), and points-of-interest need to be placed with great precision on them.

When the anatomic label of the connected components is available, the attraction may be steered to select only points on a pre-defined anatomic structure, ignoring all neighboring structures in the volume. For example, point placement may be confined on a specific vessel branch in a CT angiogram of which the vessel tree is labeled by reconstruction, or on a specific brain structure on a MR volume of which the structures are labeled by atlas registration.

Similar to the 2D case, when the anatomic label of the connected components is available, the attraction may be steered to select only voxels on a pre-defined anatomic structure, ignoring all neighboring structures in the volume. For example, point placement may be confined on a specific bone in a CT image, of which the bone surfaces are labeled by model-based segmentation. The Voronoi diagram is obtained from the propagation of the anatomic object labels in the volume. All background voxels lying in a given Voronoi cell will attract towards an object voxel with the same label. The object voxels, the background voxels of the associated Voronoi cell, or both, may be collectively highlighted when the cursor is inside the cell, to inform the user which object will be attracted to.

*Application in a measurement tool (fig. 7)*

The current invention is particularly useful to computer-assist the placement of key measurement points in a diagnostic measurement tool such as disclosed in EP-A-1 349 098. Here, the desired measurement points usually lie on the border of anatomical structures such as bones. The resolution of current computed or digital radiography images results in an image size that prevents the image to fit on a single screen unless the image is properly scaled down. However, the user will typically wish (a) to select individual pixels in the original image at full resolution, and (b) select the pixel on the cortical border of bones. Because the distance image is computed on the basis of the full resolution input image, the nearest border point can still be selected as an individual pixel of the full resolution input image although the image mouse pointer was clicked at an approximate position in the lower resolution input image. The attracted position on gray value profile perpendicular to the bone border will also exhibit much lower inter- and intra-user positional variation because the degree of freedom of the normal component is almost completely reduced as a result of the edge detection. The machine-calculated segmentation of the first step of the disclosed method thus objectifies the point selection in the third step in contrast to the error-prone and subjective selection resulting by manual selection. The link between the two steps is provided by the vector distance transformation applied in the second step.

There is less control over the tangential component of the attracted border point, i.e. the position along the edge. This may be alleviated by a small user-interface modification. When the mouse cursor is pressed and held, the attracted border point is highlighted but not yet stored until the user releases the mouse button. At all intermediate times, the attracted border point is continually adapted until the desired location along the border is reached, after which the mouse cursor is released. This real-time interaction capability increases confidence in the final position of the point-of-interest.

*Application in simultaneous positioning and attracting a set of measurement points and auto-generating the measurements (fig. 7)*

Instead of mapping in turn each point of a set of measurement points, a group of points may be pre-positioned and attracted towards their final position in the image by a combination of the mapping methods based on anchor points, as disclosed in EP-A-1 598 778, and the point-of-interest attraction methods as laid out in the present disclosure.

In EP-A-1 598 778, a model-based geometric mapping is disclosed, whereby the geometric objects that need to be mapped in the image are encoded relative to a set of model anchor geometric objects. In the preferred embodiment of that disclosure, the anchor objects are key user points. The user manually maps the model anchor objects in the image, the number of which is typically very small. A geometric mapping transformation is subsequently established between the model anchor objects and the user-mapped model anchor objects. For example, at least two anchor points define a linear Euclidean similarity mapping, at least three anchor points define an affine mapping, and at least four anchor points define a projective mapping. All geometric objects that need to be mapped are specified in a coordinate system defined by the model anchor objects. After positioning the model anchor objects in the image, the geometric transformation is applied to all geometric objects that need to be mapped. Finally, all mapped objects are rendered in the target image according to the value of their defining parameters. In this embodiment, the point selection device is represented by (a) the points encoded in a model coordinate system, and (b) the auto-mapping in the target image based on a model-target correspondence.

In the context of a measurement application such as presented in EP-A-1 349 098, all graphical measurement objects are constructed on the basis of key measurement points, the defining parameters of which are the point's coordinates. When anchor point correspondence is achieved and model-to-target transformation is computed, all points defined in a given coordinate system are simultaneously mapped in the target image and receive their final mapped position by subsequent attraction towards their nearest computed border position, according to the method of the present invention.

Additional constraints may be imposed to increase the success rate of correct attracted point position.

Geometric constraints are for example that the length of displacement that is suggested by the distance transform is below a certain threshold $T_d$ to avoid that the attracted point is very far from the initial position implied by the anchor point mapping. If the displacement length is above the $T_d$, the initial position is retained as the first suggestion, and such points are manually dragged onto their final desired position. This situation may occur at the low-contrast hip level in full-leg examinations. Positional constraints may be applied to pairs of points simultaneously. For example, the point on the medial part of the tibial plateau may be linked to the point on medial femoral condyle by imposing that the former's position is at a shortest distance from the latter's position while still on the object edge of the tibial plateau.

Photometric constraints are for example that the orientation of the edge of the attracted point is within some angular bounds. This constraint is useful for disabling attraction towards nearer edges of a more neighboring bone, a situation which arises at the level of the lateral cortical part of the tibial metaphysis and medial cortical part of the fibular metaphysis in full-leg examinations.

The measurement dependency graph (MDG), as disclosed in EP-A-1 349 098, is an internal informatics model that ensures that the complete computation of all depending measurement objects and their graphical construction of measurement objects are auto-generated. In the event that the auto-computed border point of interest is wrong or non-existent, the user may graphically refine or change the attracted point-of-interest, for example by dragging it towards the desired position. The continuous operation of the MDG will enable real-time adaptation of all applicable measurement results and measurement graphics when one of these key measurement points has changed its position.

*Application in semi-automated border tracing (fig. 8)*

The selection of individual points-of-interest can be built into a loop, to store successive points-of-attraction associated with features-of-interest that have binarized curvilinear shapes (such as edges, ridges, crest lines for example). In this semi-automatic manner of operation, complete borders of anatomical objects can be captured under control of the user.

The user interface interaction is as follows in this application. When the user presses and holds down the left mouse button, the current attracted point-of-interest is highlighted as a colored dot, i.c. a green color indicating that the highlighted point will be accepted as a valid contour point. Then, when dragging the mouse along the intended anatomical contour, all points of interest associated with the pixel position of the path of the mouse cursor in the image are retrieved, added at the tail of the current list of border pixels, and displayed in green color in the image. In the case of erroneous attraction towards wrong border pixels, the user may undo the selected border pixels just by going back in the image, while still holding down the left mouse button. This removes points-of-interest from the list when they were attracted and stored in the list in the forward pass. Releasing the left mouse button stops adding attracted points to the list. The user may now wish to switch temporarily to a complete manual mode, by pressing a toggling escape button, where just the location of the mouse cursor in the image is stored, and not the attracted position. In this manual mode, the attracted position may still be highlighted in another color (e.g. red, indicating that the attracted point is not further used) until the user notices that the point-of-interest attraction delivers the correct result again. Pressing the escape button brings the user back in the mode wherein the automatic looked up nearest point-of-attraction is used.

It is clear from the manner of operation of the distance transforms that the manual (user-traced) path of the mouse cursor in the image does not need to follow the exact anatomic border, which in practice is very difficult to achieve even for an experienced user. Instead the correct sequence of successive attracted locations is ensured because the feature of interest is computed by a data processing algorithm operating on the image; the position of the feature of interest is looked up by the distance transform, and displayed in the image under control of the user interface.

During the tracing operation, the computed features of interest such as edges may be superimposed on the image to speed up the tracing operation even more because the available points-of-attraction are now made visible in the image.

The semi-automated border tracing may be applied to a single medical image such as a digital radiograph in order to segment one or more anatomic structures, or it may be applied to a series of slices of a 3D image, in order to segment a volume represented by a set of contours on a set of successive slices. In the latter case, attraction may be set to attract only towards points-of-interest contained within the current slice, by applying the 2D distance transform to features-of-interest on the current slice only.

In 3D images, the best delineation of pathologies is very often not possible in the originally acquired slices, but in an arbitrary angulated slice through the acquired volume. The calculation of such deduced slices can be done with a prior art technique known as Multi-Planar Reformation (MPR). By default the MPR images intersect the volume in an axial, coronal and sagittal orientation. These three images are displayed simultaneously, and due to the fact that they are orthogonal to each other they form a local coordinate system within the volume. Therefore the MPR display can also be used to emphasize the exact position of pathologies in the patient.

When the local coordinate system is rotated around one axis, the resulting MPR is called oblique. All three planes are automatically synchronized so that they always stay orthogonal to each other. By rotating the system around a second axis, the MPR is made double oblique, allowing cut planes with arbitrary orientation through the volume. This allows exact depiction of even complex shaped objects.

Each MPR plane shows the location of the two other planes by displaying the intersection lines. The user interaction is easy and intuitive: by moving the intersection lines the position of the corresponding MPR plane is changed. During interaction all MPR planes are updated interactively allowing a quick and intuitive handling.

Within every MPR plane, 2D measurements like distances and angles can be performed. The constituent measurement points can be initially positioned by a mouse cursor and attracted towards their nearest object point in the current MPR plane, using the computationally fast vector distance field methods applied on the object(s) in the MPR plane.

*Application in computer-assisted landmark editing for building segmentation models*

Another application of point-of-interest attraction is situated in the field of construction of segmentation models that are subsequently used in model-based segmentation, such as disclosed in EP05107903.6 and EP05107907.7. Here, position, positional relationships and intensity characteristics of a number of well-defined anatomical landmarks are learned from image data. These anatomical landmarks typically coincide with specific image features such as edges or ridges. The model construction usually involves a manual step of selecting a large number of landmark points with high positional precision in the image. Hence, it is clear that a computer-assisted method of point-of-interest attraction is useful to automate and objectify the landmark selection. The automation aspect is needed to increase the speed of selection points, the accuracy aspect is needed to increase the positional accuracy, and decrease positional intra- and inter-user variability. The currently disclosed method of point attraction delivers real-time response, because the nearest point for each non-object pixel or voxel is pre-computed and stored as a look-up entry, while at the same time guaranteeing positional accuracy derived from computed image features.

**Claims**

1.  A computer implemented method for point-of-interest attraction towards an object pixel in a digital image, comprising the steps of

    - performing object segmentation and classification resulting in a contour-based or a region-based representation of pixels of segmented objects with one of a set of class labels assigned to each of said segmented objects, and background pixels,
    - computing a vector distance transform image restrained to an object with a given class label comprising a vector displacement of each background pixel towards the nearest object with said given class label,
    - determining in said object with said given class label the nearest object pixel for a given background pixel by adding the vector displacement to said background pixel,
    - attracting said point-of-interest towards the determined nearest object pixel on the object with said given class label.

2.  A computer implemented method according to claim 1 wherein said point-of-interest is displayed.

3.  A user interface suitable for point-of-interest attraction towards an object pixel in a displayed digital image adapted to carry out the steps of claim 1 or claim 2 comprising

    - means for indicating and displaying a first pixel position q,
    - means for tele-porting said pixel position from the indicated first pixel position q towards a second pixel position at the nearest object pixel position p in an object with a given class label by adding the vector displacement $\underline{v}$ retrieved from a vector distance transform image at position q
    - means for displaying the tele-ported position.

4.  A computer program product adapted to carry out the steps of claim 1 or 2 when run on a computer.

5.  A computer readable carrier medium comprising computer executable program code adapted to carry out the steps of claim 1 or 2.

**Patentansprüche**

1.  Ein computerimplementiertes Verfahren für Auswertungspunktanziehung zu einem Objektpixel in einem Digitalbild, umfassend die folgenden Schritte:

    - Ausführen einer Objektsegmentierung und Objektklassifizierung, wobei eine konturbasierte oder regionbasierten Darstellung von Pixeln segmentierter Objekte mit einem Klassenlabel eines Satzes von jedem der segmentierten Objekte zugeordneten Klassenlabeln, und von Hintergrundpixeln erhalten wird,
    - Berechnen eines Vektorabstand-Transformationsbildes, das auf ein Objekt mit einem vorgegebenen Klassenlabel, das eine Vektorverschiebung jedes Hintergrundpixels zum nächstgelegenen Objekt mit dem vorgegebenen Klassenlabel umfasst, beschränkt ist,
    - Bestimmen im Objekt mit dem vorgegebenen Klassenlabel des nächstgelegenen Objektpixels für ein vorgegebenes Hintergrundpixel durch Addieren der Vektorverschiebung zum Hintergrundpixel,
    - Anziehen des Auswertungspunktes zum bestimmten nächstgelegenen Objektpixel auf dem Objekt mit dem vorgegebenen Klassenlabel.

2.  Ein computerimplementiertes Verfahren nach Anspruch 1, wobei der Auswertungspunkt angezeigt wird.

3.  Eine für Auswertungspunktanziehung zu einem Objektpixel in einem angezeigten Digitalbild geeignete, zur Ausführung der Schritte nach Anspruch 1 oder Anspruch 2 angepasste Benutzerschnittstelle, umfassend:

    - Mittel zum Angeben und Anzeigen einer ersten Pixelposition q,
    - Mittel zum Teleportieren der Pixelposition von der angegebenen ersten Pixelposition q zu einer zweiten Pixelposition an der nächstgelegenen Objektpixelposition p in einem Objekt mit einem vorgegebenen Klassenlabel durch Addieren der von einem Vektorabstand-Transformationsbild an Position q erfassten Vektorverschiebung $\underline{v}$,

- Mittel zum Anzeigen der teleportierten Position.

**4.** Ein Computerprogrammprodukt, das so angepasst ist, dass es bei Verwendung auf einem Computer die Ausführung der Schritte nach Anspruch 1 oder 2 sichert.

**5.** Ein computerlesbares Trägermedium, enthaltend einen auf einem Computer ausführbaren Programmcode, der so angepasst ist, dass er die Ausführung der Schritte nach Anspruch 1 oder 2 sichert.

**Revendications**

**1.** Procédé mis en oeuvre par ordinateur pour l'attraction de points d'intérêt vers un pixel d'objet dans une image numérique, comprenant les étapes consistant à:

- exécuter une segmentation et classification d'objet permettant d'obtenir une représentation basée sur des contours ou des régions de pixels d'objets segmentés ayant une étiquette de classe d'un ensemble d'étiquettes de classe assignées à chacun des objets segmentés et de pixels de fond,
- calculer une image de transformation à distance vectorielle limitée à un objet ayant une étiquette de classe prédéterminée comprenant un déplacement vectoriel de chaque pixel de fond vers l'objet le plus proche ayant l'étiquette de classe prédéterminée,
- déterminer dans l'objet ayant l'étiquette de classe prédéterminée le pixel d'objet le plus proche pour un pixel de fond prédéterminé en ajoutant le déplacement vectoriel au pixel de fond,
- attirer le point d'intérêt vers le pixel d'objet le plus proche déterminé sur l'objet ayant l'étiquette de classe prédéterminée.

**2.** Procédé mis en oeuvre par ordinateur selon la revendication 1, **caractérisé en ce que** le point d'intérêt est affiché.

**3.** Interface utilisateur appropriée pour l'attraction de points d'intérêt vers un pixel d'objet dans une image numérique affichée et adaptée de façon à exécuter les étapes selon la revendication 1 ou 2, comprenant:

- des moyens servant à indiquer et afficher une première position de pixel q,
- des moyens servant à téléporter la position de pixel de la première position de pixel indiquée q vers une deuxième position de pixel à la position de pixel d'objet la plus proche p dans un objet ayant une étiquette de classe prédéterminée en ajoutant le déplacement vectoriel $\underline{v}$ obtenu à partir d'une image de transformation à distance vectorielle à la position q,
- des moyens servant à afficher la position téléportée.

**4.** Produit de programme informatique adapté de façon à assurer, lorsqu'il est utilisé sur un ordinateur, l'exécution des étapes selon la revendication 1 ou 2.

**5.** Support lisible par ordinateur, comprenant un code de programme exécutable sur ordinateur adapté de façon à assurer l'exécution des étapes selon la revendication 1 ou 2.

2D image
3D volume

↓

Image Object
Determination e.g.
Image Segmentation

↓

Segmented image
(regions or edges)

↓

Connected Component
Analysis

Labeled Object Image

Binary Object Image

Distance Transforms

Label Propagation

Vector Components
Propagation +
Distance Computation

↓

↓

Voronoi Diagram
in 2D or 3D

Vector Distance Field

Point Selection Device

↓

Nearest
Point-Of-Interest

Fig.1

| b | a | b |
|---|---|---|
| a | 0 | a |
| b | a | b |

3x3 mask

Fig. 2a

|   | c |   | c |   |
|---|---|---|---|---|
| c | b | a | b | c |
|   | a | 0 | a |   |
| c | b | a | b | c |
|   | c |   | c |   |

5x5 mask

Fig. 2b

| | | |
|---|---|---|
| c | b | c |
| b | a | b |
| c | b | c |

First slice ($z = -1$) of 3x3x3 mask

| | | |
|---|---|---|
| b | a | b |
| a | 0 | a |
| b | a | b |

Second (centered) slice ($z = 0$) of 3x3x3 mask

| | | |
|---|---|---|
| c | b | c |
| b | a | b |
| c | b | c |

Third slice ($z = 1$) of 3x3x3 mask

Fig. 3a

|   | f |   | f |   |
|---|---|---|---|---|
| f | e | c | e | f |
|   | c |   | c |   |
| f | e | c | e | f |
|   | f |   | f |   |

First slice ($z=-2$) of 5x5x5 mask

| f | e | c | e | f |
|---|---|---|---|---|
| e | d | b | d | e |
| c | b | a | b | c |
| e | d | b | d | e |
| f | e | c | e | f |

Second slice ($z=-1$) of 5x5x5 mask

|   | c |   | c |   |
|---|---|---|---|---|
| c | b | a | b | c |
|   | a | 0 | a |   |
| c | b | a | b | c |
|   | c |   | c |   |

Third (centered) slice ($z=0$) of 5x5x5 mask

| f | e | c | e | f |
|---|---|---|---|---|
| e | d | b | d | e |
| c | b | a | b | c |
| e | d | b | d | e |
| f | e | c | e | f |

Fourth slice ($z=1$) of 5x5x5 mask

|   | f |   | f |   |
|---|---|---|---|---|
| f | e | c | e | f |
|   | c |   | c |   |
| f | e | c | e | f |
|   | f |   | f |   |

Fifth slice ($z=2$) of 5x5x5 mask

Fig. 3b

Fig. 4a

x

y

| (-1,-1) | (0,-1) | (1,-1) |
|---------|--------|--------|
| (-1,0)  | (0,0)  |        |
|         |        |        |

F1

x

y

|        |       |       |
|--------|-------|-------|
|        | (0,0) | (1,0) |
|        |       |       |

F2

|       |       |       |
|-------|-------|-------|
|       | (0,0) | (1,0) |
| (1,1) | (0,1) | (1,1) |

y   y

x       x

B1

|         |       |       |
|---------|-------|-------|
| (-1,0)  | (0,0) |       |
|         |       |       |

B2

Fig. 4b

Forward Pass                    Backward Pass

Fig. 5a

Fig. 5b

Forward Pass                    Backward Pass

Fig. 5c

Fig. 6

MEASUREMENT VALUES

IMAGE

TEMPLATE

Geometric calculations

Geometric mapping

1  2a  2b
2c
9b
9a

12b
12a

14b
14a

20b
20a
25b
25a

27b
27a

29b
29a

33

Fig. 7

Fig. 8

Axial view

Coronal view

Sagittal view

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1349098 A
- EP 1598778 A
- EP 05107903 A
- EP 05107907 A

### Non-patent literature cited in the description

- **YE et al.** *The Signed Euclidean Distance Transform and Its Applications,* 1988
- Overview and fundamentals of medical image segmentation. **J. ROGOWSKA.** Handbook of Medical Imaging - Processing and Analysis. Academic Press, 69-85
- Image Segmentation. **B.M. DAWANT ; A.P. ZIJDENBOS.** Handbook of Medical Imaging - Volume 2. Medical Image Processing and Analysis. vol. 2, 71-127
- Distance transformations: fast algorithms and applications to medical image processing, Ph.D. thesis. **O. CUISENAIRE.** Laboratoire de telecommunications et télédétection. Université Catholique de Louvain, October 1999, 213